# EUROPEAN PATENT APPLICATION

(11) **EP 1 873 646 A1**
(43) Date of publication of application: **02.01.2008**
(21) Application number: 06255582.6
(22) Date of filing: 30.10.2006
(51) Int. Cl.: G06F 11/26, H04Q 7/34

(54) **Radio base station equipment**

(30) Priority: 28.06.2006 JP 2006177887
(71) Applicant: Fujitsu Ltd., Kawasaki-shi, Kanagawa 211-8588 (JP)
(72) Inventor: Takada, Kenji, c/o Fujitsu Limited, Kawasaki-shi Kanagawa 211-8588 (JP)
(74) Representative: Stebbing, Timothy Charles

(57) **Abstract**

For each of a plurality of call processing control units (30) constituting a base station, an initiation condition minimally necessary for restarting call processing is set. A maintenance supervision and control unit (20) in the base station decides whether each call processing control unit (30) satisfies the above initiation condition. If not all the call processing control units (30) satisfy the initiation condition, the call processing control is restarted just for those call processing control units (30) which do satisfy it. Thus, the down time in the base station is reduced, minimising loss of service to users.

## Description

This application is based upon and claims the benefit of priority from the prior Japanese Patent Application No.2006-177887, filed on June 28, 2006.

The present invention relates to a base station used in a radio communication system, and more particularly to a base station enabling reduction of a suspension time at the time of restart (system reset).

Radio base station equipment (hereafter referred to as a "base station") employed in a radio communication system includes two control units: a call processing control system for managing voice and data processing; and a maintenance supervision and control system for managing maintenance and operation of the base station concerned.

A control unit in the call processing control system (hereafter referred to as "call processing control unit") and a control unit in the maintenance supervision and control system (hereafter referred to as " maintenance supervision & control unit") are further constituted of a plurality of functional portions, respectively.

One base station may include a plurality of call processing control units (for example, each call processing control unit being separately provided for each of a plurality of frequency bands), so as to improve the accommodation capacity of the base station.

Each functional portion is constituted of an on-board hardware device (computer device) having a CPU mounted thereon for performing software processing. Such an on-board hardware device is called a "card". Each functional portion may be configured of a single card with no redundancy, a plurality of cards in a redundant configuration, or a risk spreading configuration enabling load distribution over a plurality of cards. The call processing control unit, as well as the maintenance supervision & control unit, is constituted of a hardware unit called a "shelf" on which each card corresponding to each of the plurality of functional portions is mounted.

At the time of restart (system reset) processing of the base station, it is necessary to restart each of the pluralityof functional portions (cards) constituting each control unit. At the time of initializing (starting up) the card, wherein each card is initialized by reading a systemdata file for the self-card from a system data storage provided separately, a predetermined time is required for this.

The restart processing of the base station may be performed by means of remote control to a recover from an abnormality. Or, when a call processing control unit is added to provide another frequency band, the restart processing may also be performed to reflect a new system file, downloaded from upper-level equipment, on the newly installed call processing control unit corresponding to the extended frequency band.

If restart processing fails, the base station can no longer function , and in the case of the remote control failure, a worker has to be dispatched to the site the base station is located on, so as to manually replace a card and restart the operation.

As described above, the base station is constituted of the call processing control unit and the supervision & control unit. In the base station handling a plurality of frequency bands, each call processing control unit is provided for each frequency band. When a frequency band is newly added, a new call processing control unit is added. When adding the above new call processing control unit, the restart processing of the base station is needed.

When making the base station perform the restart processing (system reset), if the normal initialization of all the functional portions in the base station is awaited, a long time is required until the call processing service can be restarted. This inconveniences portable telephone users by increasing downtime of the communication service. If the base station operation is started before the normal start of all the functional portions, there is a risk that the base station fails to be in normal operation.

It is therefore desirable to provide radio base station equipment enabling reduction of a suspension time at the time of restart processing so as to minimize the influence upon the portable telephone users, while securing high reliability for maintaining normal operation.

According to the present invention, there is provided a base station including a plurality of call processing control units performing call processing control, andasupervision and control unit supervising the call processing control units, the supervision and control unit decides whether each initiation state of the call processing control units satisfies a predetermined condition at the time of restart processing of the radio base station equipment, and even when the entire plurality of call processing control units do not satisfy the predetermined condition, the supervision and control unit causes the call processing control to be restarted only in theor each call processing control unit satisfying the predetermined condition.

In one embodiment of the invention, the call processing control unit includes a plurality of functional portions, and the predetermined condition is an initialization (start/restart) sequence of the plurality of functional portions, and the supervision and control unit causes the call processing control to be restarted only in the call processing control unit in which the plurality of functional portions have been initialized according to the initialization sequence set as the predetermined condition.

In another embodiment , the call processing control unit includes a plurality of functional portions each having a plurality of computer devices executing an identical function, and the predetermined condition is the number of computer devices to be initialized minimally in regard to each of the plurality of functional portions, and the supervision and control unit causes the call processing control to be restarted only in the or each call processing control unit in which the number of the computer devices initialized in each of the plurality of functional portions is no smaller than the number set as the predetermined condition.

In a further embodiment , the call processing control unit includes a plurality of functional portions, and the predetermined condition is an initialization time in each of the plurality of functional portions, and the supervision and control unit causes the call processing control to be restarted only in the call processing control unit in which the plurality of functional portions have been initialized within the initialization time set as the predetermined condition.

In a still further embodiment, the call processing control unit includes a plurality of functional portions each having a plurality of computer devices executing an identical function, and the predetermined condition includes a first condition specifying an initialization sequence of the plurality of functional portions, a second condition specifying the number of computer devices to be initialized minimally in regard to each of the plurality of functional portions, and a third condition specifying the initialization time of each of the plurality of functional portions, and the supervision and control unit causes the call processing control to be restarted only in the call processing control unit in which the plurality of functional portions have been initialized according to the initiation sequence set as the first condition, or the call processing control unit in which the number of the computer devices initialized in each of the plurality of functional portions is no smaller than the number set as the second condition, or the call processing control unit in which the plurality of functional portions have been initialized within the initiation time set as the third condition.

In the above base station equipment, each of the plurality of call processing control units may be provided for a respective frequency band handled by the base station .

Alternatively, a plurality of call processing control units may be provided for one frequency band handled by the base station.

Preferably, the supervision and control unit notifies upper-level equipment connected to the radio base station equipment via a channel about any call processing control unit having not satisfied the predetermined condition and the reason therefor.

According to the present invention, the base station operation is restarted by making the call processing restart only in a call processing control unit which has satisfied an initialization condition minimally required for restarting the call processing, without waiting for the initialization of the entire call processing control units constituting the base station. In this way, the suspension time of the base station can be reduced and the effect upon the users can be minimised.

Further features of the present invention will become more apparent by the following description of the embodiments with the accompanied drawings, in which:
FIG. 1 shows a diagram illustrating an exemplary configuration of a base station according to an embodiment of the present invention.
FIG. 2 shows a sequence chart illustrating first restart processing in the base station according to the embodiment of the present invention.
FIG. 3 shows a sequence chart illustrating second restart processing in the base station according to the embodiment of the present invention.
FIG. 4 shows a sequence chart illustrating third restart processing in the base station according to the embodiment of the present invention.
FIG. 5 shows a sequence chart illustrating fourth restart processing in the base station according to the embodiment of the present invention.
FIG. 6 shows a sequence chart illustrating restart processing when a plurality of call processing control units 30 are provided in one frequency band.
FIG. 7 shows a diagram illustrating an exemplary fault code table stored in a maintenance supervision & control unit 20.
FIG. 8 shows a diagram illustrating an exemplary fault code table stored in upper-level equipment 100.

The preferred embodiment of the present invention is described hereinafter referring to the charts and drawings. However, it is to be noted that the technical scope of the present invention is not limited to the embodiments described below.

According to the embodiment of the present invention, there is set an initiation condition minimally required for restarting call processing in a plurality of call processing control units constituting a base station. In the following description, "initiation" refers to initialization, i.e. the starting or restarting of operation of a call processing control unit. A maintenance supervision and control unit in the base station decides whether each call processing control unit satisfies the above initiation condition. Even when the entire plurality of call processing control units do not satisfy the initiation condition, the or each call processing control unit satisfying the initiation condition is instructed to restart the call processing control. Thus, the suspension time of the base station is reduced, and the influence upon the user is restricted to the minimum.

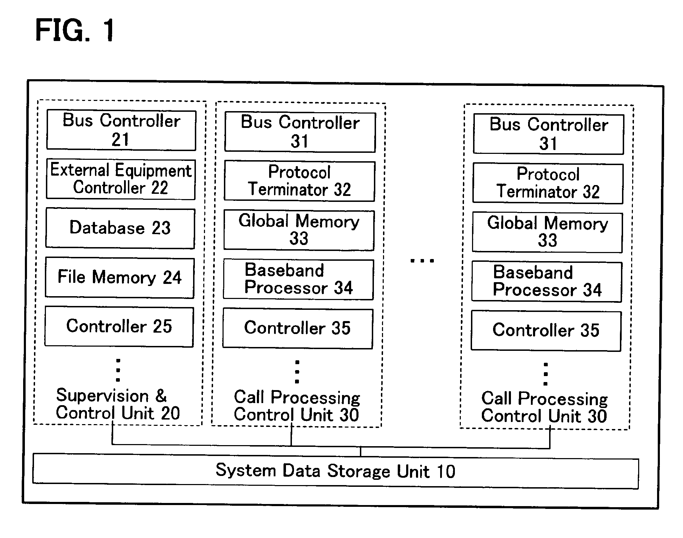

FIG. 1 shows a diagram illustrating an exemplary configuration of a base station according to an embodiment of the present invention. The base station includes a system data storage unit 10, a maintenance supervision & control unit 20, and a plurality of call processing control units 30.

Each of the set of call processing control units 30 may be provided for each of a plurality of frequency bands (1.7 GHz band, 2 GHz band, and so on). Or, in case that a redundant configuration is introducedor subscribers are accommodated separately, it may also be possible that multiple call processing control units 30 are provided for a single radio frequency band.

System data storage unit 10 stores system data i.e. basic data necessary for operating the base station, and is constituted of a nonvolatile memory.

Maintenance supervision & control unit 20 is a control unit for maintaining and supervising the operation condition of the base station, and is constituted of a hardware unit (or shelf) including the following functional portions, respectively realized as on-board hardware devices (computer devices called cards), mounted thereon.

A bus controller 21 in maintenance supervision & control unit 20 includes an arbitration function of a common bus for performing data transmission/reception between each cardmounted on maintenance supervision & control unit 20, and manages which card has an access right at present.

An external equipment controller 22 controls external equipment attached to the base station. Typically, as external equipment, there are a low-noise amplifier, station building facilities, an antenna tilt controller, and so on. External equipment controller 22 has interfaces for controlling such external equipment, and controls the external equipment by transmitting and receiving control signals to/from the external equipment through the above interfaces. For example, external equipment controller 22 confirms whether the low-noise amplifier is operating normally, checks whether the door of the facilities in the station building is kept closed, or whether the air-conditioner works well, and also changes the direction of the antenna tilt.

A database 23 is constituted of a memory for storing call processing traffic conditions. A controller 25 in maintenance supervision & control unit 20 stores the call processing traffic conditions in database 23 according to an instruction originating from upper-level equipment (operation center).

A file memory 24 includes a file storage for temporarily storing system data downloaded from system data storage unit 10, as well as fault information data of the base station. According to an instruction from the upper-level equipment (operation center), controller 25 in maintenance supervision & control unit 20 downloads the system data from system data storage unit 10, and uploads the fault information to the upper-level equipment. File memory 24 temporarily stores such data.

Controller 25 in maintenance supervision & control unit 20 plays the key role of maintenance supervision & control unit 20, including supervision of the states of all the cards in the base station, report of a card state change to the upper-level equipment, and execution of control orders from the upper-level equipment and response thereto.

Call processing control unit 30 is a control unit for controlling the radio communication with the user mobile communication terminals. Similar to maintenance supervision & control unit 20, call processing control unit 30 is constituted of a hardware unit (shelf) including the following functional portions, respectively realized as on-board hardware devices (cards), mounted thereon.

A bus controller 31 in call processing control unit 30 includes an arbitration function of a common bus for performing data transmission/reception between each card mounted in call processing control unit 30, and manages which card currently has the access right.

A protocol terminator 32 extracts a specific signal from the data signals transmitted in a predetermined format from the upper-level equipment, and also transmits a signal to be transmitted to the upper-level equipment after converting into a predetermined format. Through a wired channel between the base station and the upper-level equipment, signal transmission and reception are performed in a certain format. Protocol terminator 32 extracts a specified signal from the above format according to a predetermined protocol, and converts a signal to be transmitted to the predetermined format according to a predetermined protocol.

A global memory 33 includes a memory for storing call processing information currently in operation. Call processing control unit 30 has a redundant configuration so as not to ensure service to users as far as possible. The redundant configuration is constituted of two cards: an operation card, and a standby card. The standby card is substituted for the operation card when the operation card currently in use becomes unable to continue the service due to a fault, etc. At this time, the standby card has to take over the call processing performed by the existing operation card. For this purpose, the call processing information in operation is stored in the memory of the then standby card in real time. Global memory 33 is a memory provided in the standby card, and is constituted of a volatile, high-speed accessible memory.

A baseband processor 34 performs baseband signal processing in Communications with the user mobile communication terminal. Between the base station and the mobile communication terminal, communication is performed through data transferred on a high-frequency carrier wave in the radio frequency band (1.7 GHz, 2 GHz, etc.), while in the base station, the data are extracted from the radio frequency, and the frequency is converted to allow signal processing to be performed on a low frequency band called the baseband. Baseband processor 34 performs the signal processing in the baseband.

A controller 35 in call processing control unit 30 plays the key role in call processing, and performs communication control with the mobile communication terminal according to instructions originating from the upper-level equipment.

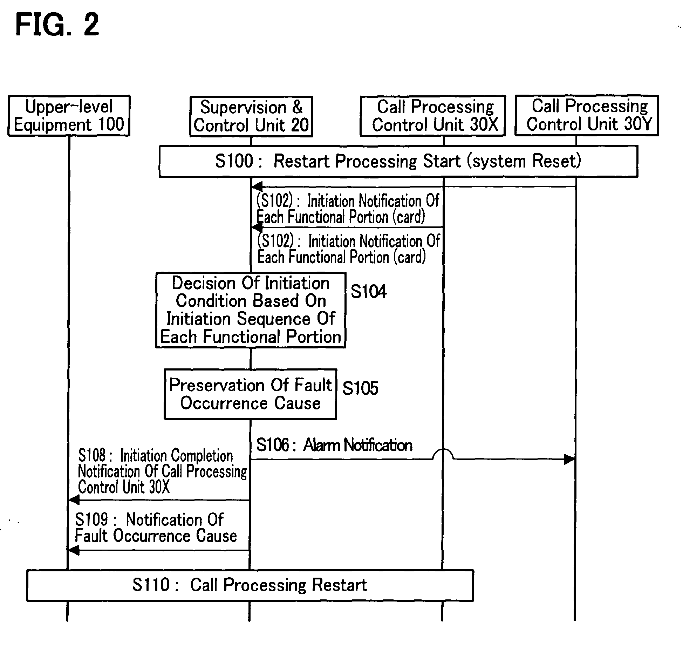

FIG. 2 shows a sequence chart illustrating first restart processing in the base station according to the embodiment of the present invention. In FIG. 2, the base station includes a call processing control unit 30X for handling a radio frequency band X and a call processing control unit 30Y for handling a radio frequency band Y, as a plurality of call processing control units 30.

In the first restart processing, as a minimally necessary initiation condition to restart call processing (to be operable) in call processing control unit 30, there is set an initiation sequence in each functional portion of call processing control unit 30. In the restart processing, when the initiation is performed normally, without any trouble such as a fault, the initiation sequence of each functional portion is uniquely fixed. Maintenance supervision & control unit 20 decides whether each functional portion (card) in the plurality of call processing control units 30 has been initiated in regular order of the initiation sequence, and decides that call processing control unit 30 is initiated normally when initiated in the regular order of the initiation sequence. As such, using the initiation sequence, it is decided whether each call processing control unit has been initiated normally. Even when not all call processing control units 30 satisfy the initiation condition, any call processing control unit (s) 30 having satisfied the initiation condition concerned is made to restart the call processing control.

The following Table 1 shows an initiation sequence of each functional portion in call processing control unit 30.

**[Table 1]**

| Table 1. Initiation sequence in the call processing control unit | |
|---|---|
| Initiation sequence | Name of the functional portions (cards) |
| 1 | Bus controller |
| 2 | Controller |
| 3 | Global memory |
| 4 | Protocol terminator |
| 5 | Baseband processor |

In FIG. 2, a system reset is performed in the base station, and then, the restart processing is started (S100). With this, all of the functional portions (cards) in the base station begin the restart processing, and whenever each functional portion in call processing control unit 30 is initiated normally, each functional portion in call processing control unit 30 transmits an initiation notification to maintenance supervision & control unit 20 (S102).

On receipt of the initiation notification from each functional portion of the plurality of call processing control units 30, maintenance supervision & control unit 20 decides the initiation sequence of each functional portion of call processing control units 30. Then, based on the initiation condition according to the initiation sequence, maintenance supervision & control unit 20 decides whether each call processing control unit 30 is initiated to be capable of performing call processing control (S104) .

For example, if the sequence of receiving the initiation notifications from the respective functional portions of call processing control unit 30X handling the frequency band X is identical to the initiation sequence shown in the above Table 1, maintenance supervision & control unit 20 decides that call processing control unit 30X has started up normally .

Also, if the sequence of receiving the initiation notifications from the respective functional portions of call processing control unit 30Y handling the frequency band Y is different from the sequence shown in the above Table 1, maintenance supervision & control unit 20 decides that call processing control unit 30Y has not started up normally. It is considered that a disruption of the initiation sequence occurred because the initiation of at least one functional portion in call processing control unit 30Y was delayed due to some trouble. Since there is assumed to be an abnormality in the function portion whose initiation has been delayed, it is decided to be an abnormal initiation.

On completion of the decision on the initiation condition in regard to the entire set of call processing control units 30 in the base station, maintenance supervision & control unit 20 issues an alarm notification to call processing control unit 30 having not satisfied the initiation condition (that is, not decided as being normally initiated) (S106). With this, the related call processing control unit 30 suspends the operation, and is separated from the control of maintenance supervision & control unit 20. In the example shown in FIG. 2, maintenance supervision & control unit 20 issues the alarm notification to call processing control unit 30Y, and the operation of call processing control unit 30Y is suspended accordingly. Namely, the call processing control is not performed.

Meanwhile, maintenance supervision & control unit 20 issues to upper-level equipment 100 an initiation completion notification of call processing control unit 30 having satisfied the initiation condition (which is decided to be normally initiated) among the entire set of call processing control units 30 in the base station (S108). In the example shown in FIG. 2, maintenance supervision & control unit 20 notifies upper-level equipment 100 to the effect that call processing control unit 30X has been initiated normally.

Additionally, in regard to call processing control unit 30 decided as being not normally initiated (i.e. for which the initiation condition is not satisfied) from the decision of the initiation condition, maintenance supervision & control unit 20 preserves the cause of the fault occurrence in a predetermined memory (S105), and further, preferably, reports the above cause toupper-level equipment 100 (S109). With this, upper-level equipment 100 can obtain the fault occurrence cause promptly, which enables upper-level equipment 100 to prompt early repair of the faulty call processing control unit 30.

By obtaining the fault occurrence cause from upper-level equipment 100, maintenance workers can promptly perform restoration work of the call processing control unit concerned

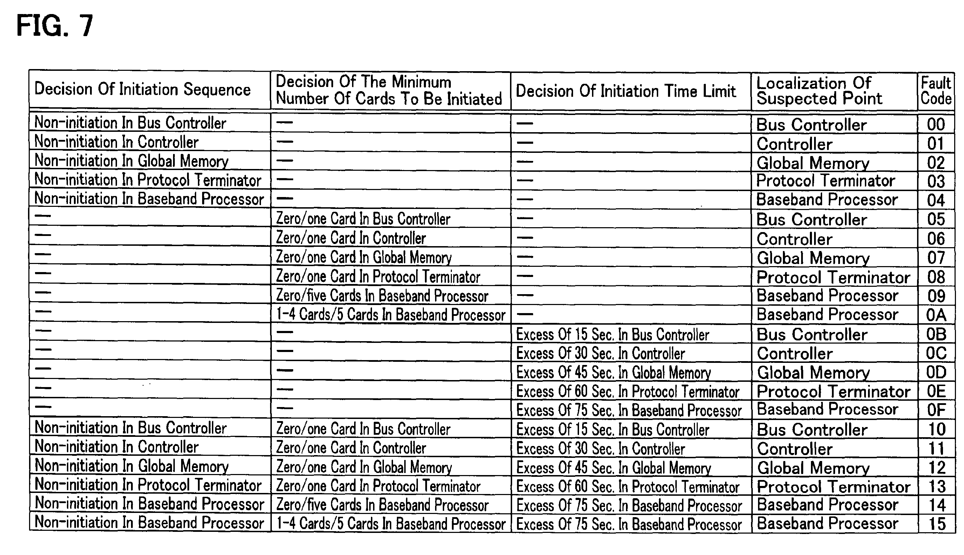

FIG. 7 shows a diagram illustrating an exemplary fault code table stored in maintenance supervision & control unit 20. The fault code table shown in FIG. 7 is a table including each fault code in correspondence with each cause when the initiation condition is not satisfied. When a certain call processing control unit 30 has not satisfied the initiation condition, maintenance supervision & control unit 20 obtains the fault code corresponding to the cause of the initiation condition not being satisfied by referring to the fault code table shown in FIG. 7. Also, maintenance supervision & control unit 20 stores the corresponding fault code in a predetermined memory, together with the identification information of the call processing control unit 30 concerned. Thereafter, maintenance supervision & control unit 20 transmits to upper-level equipment 100 the identification information of the related call processing control unit 30, as well as the fault code.

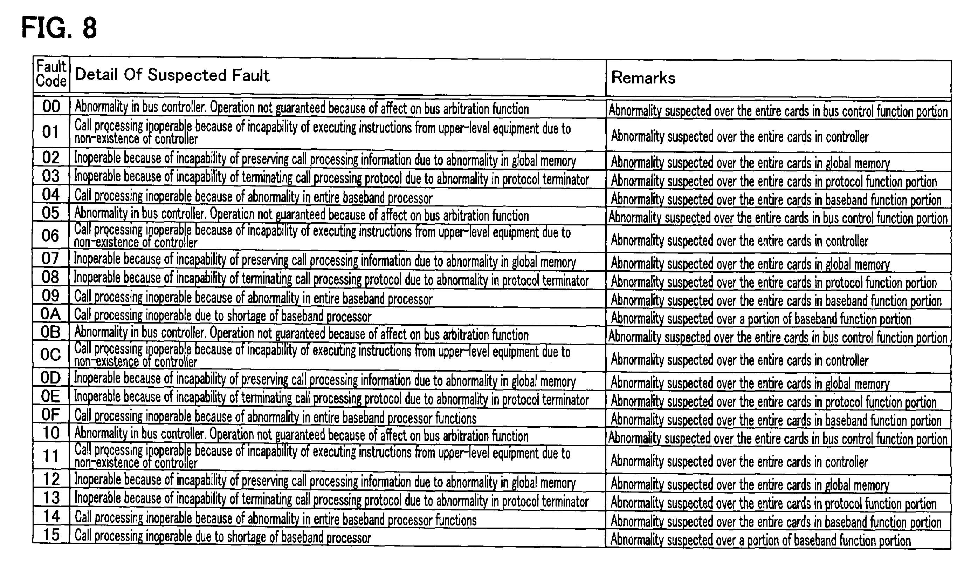

FIG. 8 shows a diagram illustrating an exemplary fault code table stored in upper-level equipment 100. The fault code table shown in FIG. 8 is a table including each fault code in correspondence with detailed information of each suspected fault. On receipt of a fault code frommaintenance supervision & control unit 20, upper-level equipment 100 obtains detailed information on a suspected fault corresponding to the fault code by referring to the fault code table shown in FIG. 8. With this, upper-level equipment 100 can promptly grasp the fault cause of call processing control unit 30 which has not satisfied the initiation condition. When repair and inspection are performed by dispatched maintenance workers under the instruction from upper-level equipment 100, since the maintenance workers can know the fault cause of call processing control unit 30 in advance, the repair can be started instantly, and thus, prompt repair becomes possible.

Referring back to FIG. 2, when call processing control unit 30 normally initiated does not receive an operation suspension alarm from maintenance supervision & control unit 20, and when maintenance supervision & control unit 20 notifies upper-level equipment 100 of the initiation completion of call processing control unit 30 concerned, call processing control unit 30 restarts call processing control operation after the initiation (S110).

As such, instead of call processing control being restarted after the completion of normal initiation in the entire call processing control unit 30, the call processing control operation is restarted only using call processing control units 30 which have started up normally. Therefore, it becomes possible to reduce the suspension time of the base station, which reduces an unavailable time to users of portable telephones extent, thereby bringing about service improvement.

Although users using the frequency band handled by a call processing control unit 30 which has not started up normally cannot yet use the mobile communication service , users using the frequency bands of call processing control units 30 which start up normally can use the mobile communication service. Thus, the influence upon the users can be restricted to the minimum.

Also, it is possible to distinguish processing control 1 units 30 starting normally from any which do not, at an early stage, making it possible to prompt early repair by maintenance workers.

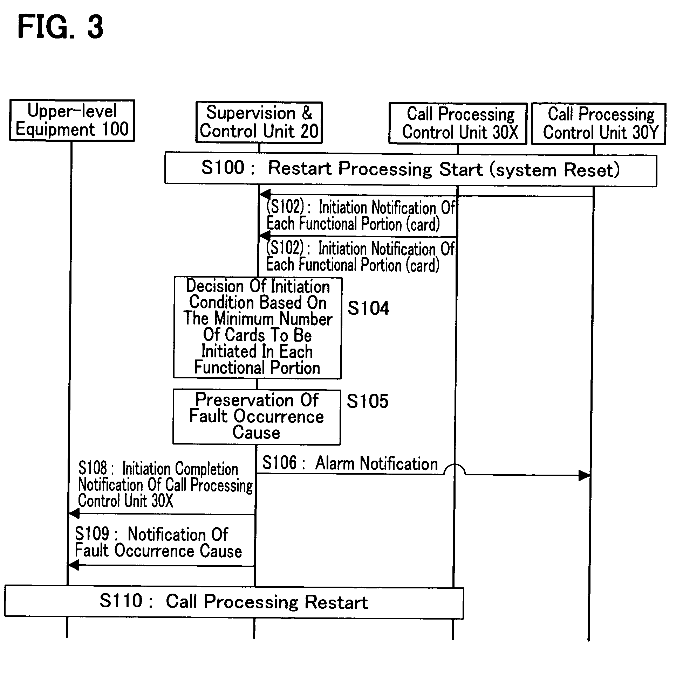

FIG. 3 shows a sequence chart illustrating second restart processing in the base station according to the embodiment of the present invention. Similar to FIG. 2, the base station includes a call processing control unit 30X handling a radio frequency band X and a call processing control unit 30Y handling a radio frequency band Y, as a plurality of call processing control units 30.

In the second restart processing, as an initiation condition of call processing control unit 30 minimally required for restarting call processing (to be operable), there is set a minimum number of cards to be initiated for each card constituting each functional portion of call processing control unit 30. Each functional portion may have three configurations: a stand-alone configuration (constituted of a single card); a redundant configuration (constituted of two or more cards, including an operating card and a standby card); and a load sharing configuration (which is a configuration in which an identical function is simultaneously performed in a plurality of cards). The number of cards to be initiated in each configuration is as shown below.

Stand-alone configuration: initiation is required for a card of a functional portion essential for call processing control, while initiation is not always required for a card of a functional portion not essential for call processing service.

Redundant configuration: initiation of one card out of those provided may be sufficient.

Load sharing configuration: initiation of a minimal number of cards for starting call processing control may be sufficient, while the initiation of all cards is not necessary.

Maintenance supervision & control unit 20 decides that normal initiation has occurred when the minimum number of cards of the respective functional portions (cards) in the plurality of call processing control units 30 or more start up correctly. As such, it is decided whether each call processing control unit has been initiated normally depending on the number of functional portions (cards) which restarted successfully . Even if the entire plurality of call processing control units 30 do not satisfy the initiation condition, the call processing control is restarted in those call processing control units 30 having satisfied the above initiation condition.

The following Table 2 shows the number of cards to be initiated for each functional portion of call processing control unit 30.

**[Table 2]**

| Table 2. Minimum number of cards to be initiated in the call processing control unit | | | |
|---|---|---|---|
| | Name of the functional portions (cards) | Minimum number of cards to be initiated (Total number of cards) | |
| 1 | Bus control portion | 1 | (2) |
| 2 | Controller | 1 | (2) |
| 3 | Global memory portion | 1 | (2) |
| 4 | Protocol terminator | 1 | (2) |
| 5 | Baseband processing portion | 5 | (12) |

In FIG. 3, a system reset is performed in the base station, and then, the restart processing is started (S100). With this, all the functional portions (cards) in the base station begin the restart processing, and whenever each functional portion in call processing control unit 30 is initiated normally, each the functional portion in call processing control unit 30 transmits an initiation notification to maintenance supervision & control unit 20 (S102).

On receipt of the initiation notification from each functional portion (card) of the plurality of call processing control units 30, maintenance supervision & control unit 20 decides the number of functional portions (cards) initiated in each call processing control unit 30 based on the number of initiation notifications for each functional portion. Then, based on the initiation condition according to the minimum number of cards to be initiated, maintenance supervision & control unit 20 decides whether each call processing control unit 30 is initiated to be capable of performing call processing control (S120). The above decision is performed when a predetermined time elapses after the start of the restart processing, and the number of initiated cards is decided from the initiation notification having been received before the above time elapses.

For example, if the number of the initiated cards in each of the functional portions of call processing control 1 unit 30X handling the frequency band X is at least the minimum number of cards to be initiated shown in the above Table 2, maintenance supervision & control unit 20 decides that call processing control unit 30X has normally been initiated to be operational.

Also, if the number of initiated cards in regard to at least one of the functional portions of call processing control unit 30Y handling the frequency band Y is smaller than the minimum number of cards to be initiated shown in the above Table 2, maintenance supervision & control unit 20 decides that call processing control unit 30Y has not been initiated normally. It is considered that, because the initiation of at least one functional portion in call processing control unit 30Y was delayed due to some trouble, the number of the initiated cards did not reach the required number of initiation. Since there is an estimated abnormality in the functional portion concerned, it is not decided as normal initiation.

On completion of the decision on the initiation condition in regard to the entire set of call processing control units 30 in the base station, maintenance supervision & control unit 20 issues an alarm notification to the or each call processing control unit 30 not satisfying the initiation condition (that is, not decided as being normally initiated), and instructs the call processing control unit 30 concerned to suspend its operation (S106). In the example shown in FIG. 3, maintenance supervision & control unit 20 issues the alarm notification to call processing control unit 30Y, and the operation of call processing control unit 30Y is suspended accordingly. Namely, the call processing control is not performed.

Meanwhile, maintenance supervision & control unit 20 issues to upper-level equipment 100 an initiation completion notification of each call processing control unit 30 having satisfied the initiation condition (which is decided to be normally initiated) among the set of call processing control units 30 in the base station (S108). In the example shown in FIG. 3, maintenance supervision & control unit 20 notifies upper-level equipment 100 to the effect that call processing control unit 30X has been initiated normally.

When the alarm is not received from maintenance supervision & control unit 20, and maintenance supervision & control unit 20 notifies upper-level equipment 100 about the initiation completion of call processing control unit 30 concerned, call processing control unit 30 having been initiated normally restarts the call processing control operation after the initiation (S110).

For each call processing control unit 30 decided as being not normally initiated (i.e. of which initiation condition is not satisfied) from the decision of the initiation condition, maintenance supervision & control unit 20 preserves the cause of the fault occurrence (the corresponding fault code shown in FIG. 7) in a predetermined memory (S105), and further, reports the above cause to upper-level equipment 100 (S109).

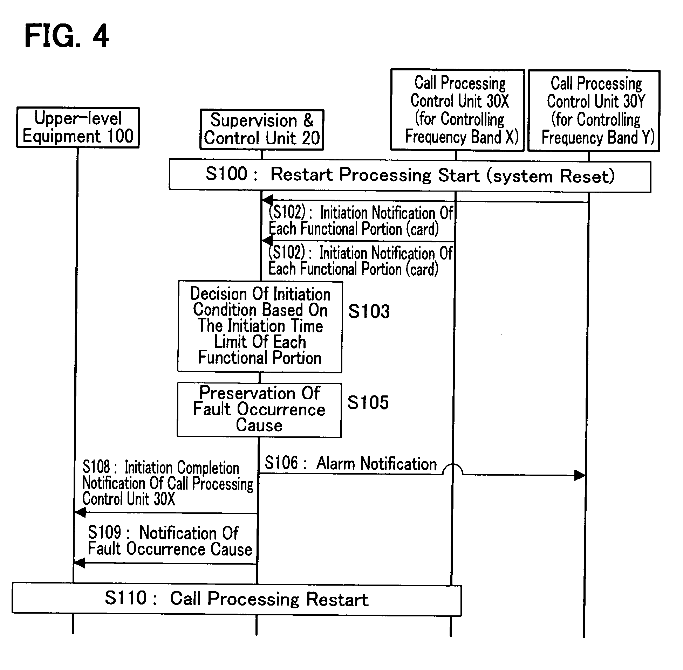

FIG. 4 shows a sequence chart illustrating third restart processing in the base station according to the embodiment of the present invention. Similar to FIG. 2, the base station includes a call processing control unit 30X handling a radio frequency band X and a call processing control unit 30Y handling a radio frequency band Y, as a plurality of call processing control units 30.

In the third restart processing, there is set an initiation time limit in each functional portion of call processing control unit 30 as an initiation condition minimally required for restarting call processing in call processing control unit 30. The initiation time of each functional portion at the time of normal initiation is measured in advance, and the initiation time limit is set by adding a predetermined time of margin to the measured normal initiation time. Maintenance supervision & control unit 20 decides normal initiation when each functional portion in call processing control unit 30 start up within the initiation time limit. As such, it is decided whether or not each call processing control unit has been initiated normally depending on the initiation time limit of each functional portion. Even if the entire plurality of call processing control units 30 do not satisfy the initiation condition, the call processing control is restarted in those call processing control units 30 which do satisfy the above initiation condition.

The following Table 3 shows the initiation time limit for each functional portion of call processing control unit 30.

**[Table 3]**

| Table 3. Initiation time limit in the call processing control unit | | |
|---|---|---|
| | Name of the functional portions (cards) | Initiation time limit (= normal initiation time + time of margin) |
| 1 | Bus control portion | 15 sec |
| 2 | Controller | 30 sec |
| 3 | Global memory portion | 45 sec |
| 4 | Protocol terminator | 60 sec |
| 5 | Baseband processing portion | 75 sec |

In FIG. 4, a system reset is performed in the base station, and then, the restart processing is started (S100) . With this, the entire functional portions (all cards) in the base station begin the restart processing, and whenever each functional portion in call processing control unit 30 is initiated normally, each functional portion in call processing control unit 30 transmits an initiation notification to maintenance supervision & control unit 20 (S102) .

On receipt of the initiation notification from each functional portion (card) of the plurality of call processing control units 30, maintenance supervision & control unit 20 measures the time from the start of the restart processing to the reception of the initiation notification, and decides the initiation time of each functional portion (card) in call processing control unit 30 from the reception time of the initiation notification. Then, based on the initiation condition according to the initiation time limit, maintenance supervision & control unit 20 decides whether each call processing control unit 30 is initiated to be capable of performing call processing control (S130).

For example, if the initiation time of all functional portions of call processing control unit 30X handling the frequency band X ranges within the initiation time limit shown in the above Table 3, maintenance supervision & control unit 20 decides that call processing control unit 30X has restarted normally and is operational.

Also, if the initiation time in regard to at least one of the functional portions of call processing control unit 30Y handling the frequency band Y exceeds the initiation time limit shown in the above Table 3, maintenance supervision & control unit 20 decides that call processing control unit 30Y has not been initiated normally. It is considered that, because the initiation of at least one functional portion in call processing control unit 30Y was delayed due to some trouble, the initiation time thereof exceeded the initiation time limit. Since there is an estimated abnormality in the functional portion concerned, it is not decided as normal initiation (decided to be abnormal).

On completion of the decision on the initiation condition in regard to the entire set of call processing control units 30 in the base station, maintenance supervision & control unit 20 issues an alarm notification to any call processing control unit 30 determined as abnormal , and instructs call processing control unit 30 concerned to suspend the operation (S106). In the example shown in FIG. 4, maintenance supervision & control unit 20 issues the alarm notification to call processing control unit 30Y, and the operation of call processing control unit 30Y is suspended accordingly. Namely, the call processing control is not performed.

Meanwhile, maintenance supervision & control unit 20 issues to upper-level equipment 100 an initiation completion notification of each call processing control unit 30 determined to have started normally among all the call processing control units 30 in the base station (S108). In the example shown in FIG. 4, maintenance supervision & control unit 20 notifies upper-level equipment 100 to the effect that call processing control unit 30X has been initiated normally.

Because the alarm is not received from maintenance supervision & control unit 20, call processing control unit 30 initiated normally restarts the call processing control operation after the initiation (S110).

For each abnormally-initialized control unit 30 maintenance supervision & control unit 20 preserves the cause of the fault occurrence (the corresponding fault code shown in FIG. 7) in a predetermined memory (S105), and further reports the above cause to upper-level equipment 100 (S109).

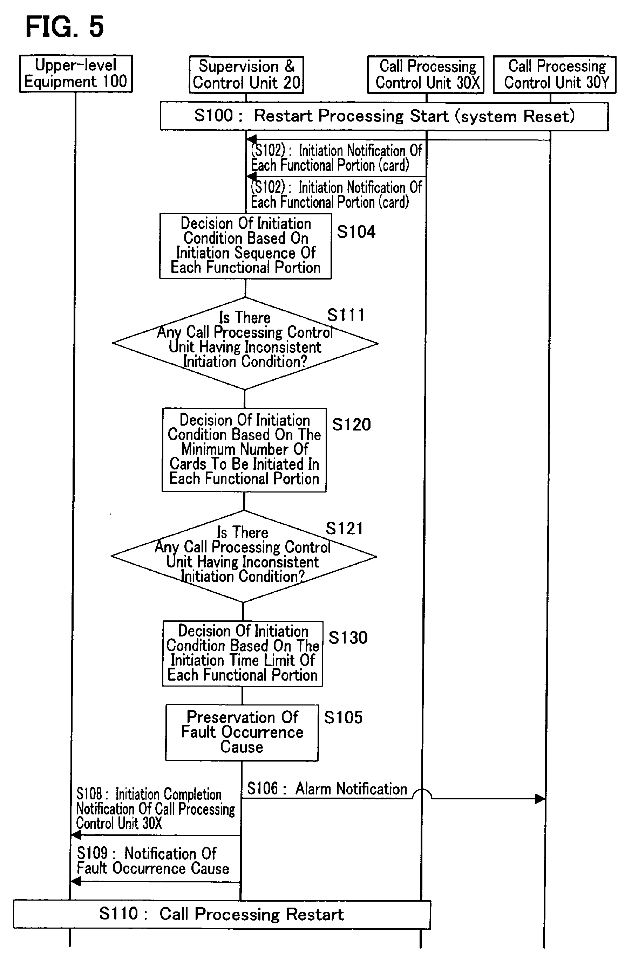

FIG. 5 shows a sequence chart illustrating fourth restart processing in the base station according to the embodiment of the present invention. In the fourth restart processing, the decision whether call processing control unit 30 has been initiated normally is made by use of the combination of the above-mentioned first to the third restart processing. In FIG. 5, the base station includes a call processing control unit 30X handling a radio frequency band X and a call processing control unit 30Y handling a radio frequency band Y, as a plurality of call processing control units 30.

As shown in FIG. 5, for each call processing control unit 30, first, it is decided whether the initiation condition based on the initiation sequence in the first restart processing is satisfied (S104). When there is any call processing control unit which does not satisfy the initiation condition based on the above initiation sequence (S111), subsequently, it is decided whether the initiation condition based on the minimum number of cards to be initiated in the second restart processing is.satisfied (S120). When there is any call processing control unit which does not satisfy the initiation condition based on the above minimum number of cards to be initiated (S121), subsequently, it is decided whether the initiation condition based on the initiation time limit in the third restart processing is satisfied (S130).

Maintenance supervision & control unit 20 issues an alarmnotification to a call processing control unit 30 which does not satisfy any of the initiation conditions of the first to the third restart processing, and instructs that call processing control 1 unit 30 to suspend its operation (S106). In the example shown in FIG. 5, maintenance supervision & control unit 20 issues the alarm notification to call processing control unit 30Y, and the operation of call processing control unit 30Y is suspended accordingly. Namely, in terms of functionality, call processing control unit 30Y is separated from the base station.

Meanwhile, maintenance supervision & control unit 20 notifies upper-level equipment 100 of each of call processing control unit 30 satisfying at least one initiation condition out of the first to the third restart processing (S108). In the example shown in FIG. 5, maintenance supervision & control unit 20 notifies upper-level equipment 100 to the effect that call processing control unit 30X has been initiated normally.

If it receives no alarm from maintenance supervision & control unit 20, a call processing control unit 30 having been initiated normally restarts call processing control operation after the initiation (S110).

For each abnormal control unit 30, maintenance supervision & control unit 20 preserves the cause of the fault occurrence (the corresponding fault code shown in FIG. 7) into a predetermined memory (S105), and further reports the above cause to upper-level equipment 100 (S109).

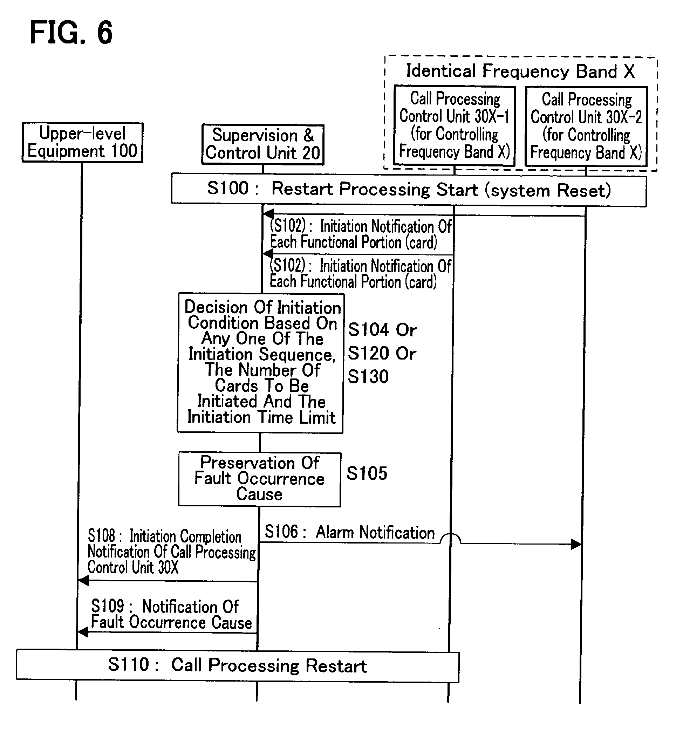

FIG. 6 shows a sequence chart illustrating restart processing when a plurality of call processing control units 30 are provided to handle the same frequency band. In FIG. 6, the base station includes a plurality of call processing control units 30X-1, 30X-2, each handling a radio frequency band X, as a plurality of call processing control units 30. It may be that another call processing control unit is additionally installed, to handle an increase of users to be accommodated in a particular frequency band.

For each call processing control unit 30 performing call processing on the same frequency band, maintenance supervision & control unit 20 performs the initiation condition decision in either of the above-mentioned first to the fourth restart processing, on a basis of each call processing control unit 30, i.e. each hardware unit (shelf), and controls to permit or suspend the operation. Such processing on a shelf-by-shelf basis can be made because the initiation state of each call processing control unit 30 does not depend on the other call processing control units 30, nor does the operation of each call processing control unit 30 influence the operation of the other call processing control units 30.

Additionally, in FIGS. 2 through 5, one or more call processing control units 30 may be provided for each frequency band.

As shown in FIG. 6, in case that a plurality of call processing control units 30 are provided for the same frequency band, the restart processing may be performed on a basis of each call processing control unit, i.e. each hardware unit, or on a basis of each frequency band.

When the restart processing is performed on the basis of each frequency, maintenance supervision & control unit 20 performs the decision of the initiation condition for the plurality of call processing control units 30 in each frequency band, and decides whether the entire plurality of call processing control units 30 in each frequency band satisfy the initiation condition. When the initiation condition is satisfied, a normal startup is determined.

The foregoing description of the embodiments is not intended to limit the invention to the particular details of the examples illustrated.

All features and advantages of the invention which fall within the scope of the invention are covered by the appended claims.

## Claims

1. Radio base station equipment comprising:
a plurality of call processing control units performing call processing control; and
a supervision and control unit supervising the call processing control units,
wherein, at the time of restart processing of the radio base station equipment, the supervision and control unit decides whether each initiation state of the call processing control units satisfies a predetermined condition, and even when the entire plurality of call processing control units do not satisfy the predetermined condition, the supervision and control unit causes the call processing control to be restarted only in the or each call processing control unit which has satisfied the predetermined condition.

2. The radio base station equipment according to claim 1,
wherein the call processing control unit comprises a plurality of functional portions, and
wherein the predetermined condition is an initiation sequence of the plurality of functional portions, and
wherein the supervision and control unit causes the call processing control to be restarted only in the or each call processing control unit in which the plurality of functional portions have been initiated according to the initiation sequence set as the predetermined condition.

3. The radio base station equipment according to claim 1,
wherein the call processing control unit comprises a plurality of functional portions, each functional portion comprising a plurality of computer devices executing an identical function, and
wherein the predetermined condition is the number of computer devices to be initiated minimally in regard to each of the plurality of functional portions, and
wherein the supervision and control unit causes the call processing control to be restarted only in the or each call processing control unit in which the number of computer devices initiated in each of the plurality of functional portions is no smaller than the number set as the predetermined condition.

4. The radio base station equipment according to claim 1,
wherein the call processing control unit comprises a plurality of functional portions, and
wherein the predetermined condition is an initiation time in each of the plurality of functional portions, and
wherein the supervision and control unit causes the call processing control to be restarted only in the or each call processing control unit in which the plurality of functional portions have been initiated within the initiation time set as the predetermined condition.

5. The radio base station equipment according to claim 1,
wherein the call processing control unit comprises a plurality of functional portions, each functional portion comprising a plurality of computer devices executing an identical function, and
wherein the predetermined condition comprises a first condition specifying an initiation sequence of the plurality of functional portions, a second condition specifying the number of computer devices to be initiated minimally in regard to each of the plurality of functional portions, and a third condition specifying the initiation time of each of the plurality of functional portions, and
wherein the supervision and control unit causes the call processing control to be restarted only in the or each call processing control unit in which the plurality of functional portions have been initiated according to the initiation sequence set as the first condition, or the call processing control unit in which the number of the computer devices initiated in each of the plurality of functional portions is no smaller than the number set as the second condition, or the call processing control unit in which the plurality of functional portions have been initiated within the initiation time set as the third condition.

6. The radio base station equipment according to any preceding claim,
wherein each of the plurality of call processing control units is provided for a respective one of radio frequency bands handled by the radio base station equipment.

7. The radio base station equipment according to any of claims 1 to 5,
wherein a plurality of the call processing control units are provided for one frequency band handled by the radio base station equipment.

8. The radio base station equipment according to any preceding claim,
wherein the supervision and control unit notifies upper-level equipment connected to the radio base station equipment via a channel about the or each call processing control unit which has not satisfied the predetermined condition and the reason therefore.
